# EUROPÄISCHE PATENTSCHRIFT

(11) **EP 0 707 912 B1**
(45) Veröffentlichungstag und Bekanntmachung des Hinweises auf die Patenterteilung: **06.06.2001**
(21) Anmeldenummer: 95250232.6
(22) Anmeldetag: 22.09.1995
(51) Int. Cl.: B23B 29/24

(54) **Vorrichtung zur Bearbeitung von Rohrenden**
Device for working tube ends
Dispositif d'usinage d'extrémités de tubes

(30) Priorität: 20.10.1994 DE 4438818
(43) Veröffentlichungstag der Anmeldung: 24.04.1996
(73) Patentinhaber: SMS Demag AG, 40237 Düsseldorf (DE)
(72) Erfinder: Esser, Karl-Josef, Dipl.-Ing., D-41179 Mönchengladbach (DE); Barth, Hermann-Josef, D-41189 Mönchengladbach (DE)
(74) Vertreter: Meissner, Peter E., Dipl.-Ing.

(56) Entgegenhaltungen:
- DE-A- 1 913 377
- DE-A- 2 642 965
- DE-A- 3 000 055
- DE-A- 3 237 587
- DE-A- 3 440 398
- DE-A- 4 019 078

## Beschreibung

Die Erfindung betrifft eine Vorrichtung zur Bearbeitung von Rohrenden, insbesondere zum Schneiden von Gewindeanschlüssen, bei der die Schneidwerkzeuge radial zum Rohr anstellbar in einem Werkzeugkopf verschiebbar angeordnet sind, der koaxial um das fest eingespannte Rohrende rotiert, wobei die Anstellbewegung der in als Schieber ausgebildeten Werkzeughaltern eingespannten Werkzeuge gegenüber dem Rohr über achsparallel zum Rohr und über dessen Umfang gleichmäßig verteilt angeordnete Schubstangen erfolgt, deren dem Rohrende ferne Enden an einem gemeinsamen koaxial zur Werkzeugkopfachse verschiebbaren Rahmen angelenkt sind und deren andere Endbereiche mit Schrägverzahnungen versehen sind, die in korrespondierende Verzahnungen an den Umlenkmitteln in Wirkverbindung stehen, über die die achsparallele Vorschubbewegung der Schubstangen in eine synchrone radiale Verschiebebewegung der Schieber zur Anstellung der Schneidwerkzeuge umsetzbar ist.

Zur Bearbeitung von Rohrenden, insbesondere zum Schneiden von Gewindeanschlüssen, beispielsweise an Tubing- und Casing-Rohren, sind Gewindeschneidmaschinen bekannt, die mit fest eingespanntem Rohr und rotierenden Werkzeugen arbeiten. Das Rohrgewinde wird in der Regel bei einmaligem Überfahren der Werkzeuge über das Rohrende hergestellt, wobei die Bewegungen der Werkzeuge Computer-Numerisch gesteuert werden. Die entsprechenden Maschinen müssen so ausgelegt sein, daß besonders enge Gewindetoleranzen erreichbar sind. Besondere Bedeutung kommt bei diesen Maschinen dem eigentlichen Werkzeugkopf zu, in dem die Werkzeuge gegen das Rohr anstellbar geführt sind. Das Rohr selbst wird in eine definierte Lage zur Maschine gebracht und, nachdem die exakte Lage des Rohrendes erreicht ist, wird der Schneidwerkzeugvorschub eingeschaltet. Die Bearbeitungswerkzeuge sind am Werkzeugkopf gleichmäßig am Umfang verteilt verschiebbar angeordnet, wobei die Zahl der verwendeten Werkzeuge zwar beliebig ist, doch in den meisten Fällen sechs Werkzeuge vorgesehen sind, von denen drei Vordrehwerkzeuge zur Bearbeitung des Konusses und drei kombinierte Fertig-Drehwerkzeuge mit den Gewindestrehlern zentrisch in dem rotierenden Werkzeugkopf angeordnet sind. Jeweils drei um 120° versetzte Werkzeuge werden dabei gleichläufig und die anderen Werkzeuge gegenläufig dazu bewegt. Bei den hohen Drehzahlen des Kopfes von beispielsweise 1000 U/min entstehen sehr hohe Fliehkräfte an den beweglichen Massen, die den möglichst klein zu haltenden Vorschubkräften der exakt zu positionierenden Werkzeuge entgegenwirken.

Eine Vorrichtung der eingangs beschriebenen Art ist aus der DE-A-3440398 bekannt. Bei der dort beschriebenen Lösung ist es aber nicht möglich, das Umlenken der Anstellkräfte für die Schneidwerkzeuge von den Schubstangen zu den Schiebern kraftneutral im Bezug auf wirksame Fliehkräfte zu erreichen. Abgesehen davon ist die dort beschriebene Lösung konstruktiv sehr aufwendig.

Eine weitere vergleichbare Maschine ist in dem US-Patent 42 89 430 beschrieben. Wenn auch dort nur zwei Werkzeuge Verwendung finden, so werden diese über Schubstangen, die achsparallel zur Werkzeugkopf- und Werkstückachse über einen gemeinsamen Rahmen verschiebbar sind, mit Hilfe von Umlenkmitteln angestellt, wobei als Umlenkmittel Schrägen an den Werkzeughaltern die Längskräfte in Querkräfte umsetzen.

Der Nachteil bekannter Rohrendenbearbeitungsmaschinen, wobei auch die des internen Standes der Technik einbezogen sind, besteht darin, daß auf die den vollen Fliehkräften aus der rotierenden Werkzeugkopfbewegung ausgesetzten Umlenkmittel und deren Schrägen und schiefen Ebenen sowie die Führungsbahnen selbst große Reibkräfte wirksam werden. Das beeinflußt die Genauigkeit der Positionierung und damit die Fertigungstoleranzen der Rohrenden nachteilig, die Führungen sind hohem Verschleiß ausgesetzt und die Wirtschaftlichkeit der Vorrichtung ist ungünstig.

Ausgehend von den bekannten Vorrichtungen zur Bearbeitung von Rohrenden liegt der vorliegenden Erfindung die Aufgabe zugrunde, eine gattungsgemäße Vorrichtung so auszugestalten, daß das Umlenken der Anstellkräfte für die Schneidwerkzeuge von den Schubstangen zu den Schiebern möglichst kraftneutral in Bezug auf die wirksamen Fliehkräfte erreichbar ist, wobei mit relativ geringem konstruktivem Aufwand hohe Leistungen bei hoher Qualität erzielbar sind.

Zur Lösung der Aufgabe wird ausgehend von den Merkmalen des Oberbegriffs erfindungsgemäß vorgeschlagen, daß die Umlenkmittel rotationsgelagert sind und über die Verzahnung der auf sie wirkenden Schubstangen verdrehbar sind.

In Abkehr von den bisherigen Lösungen wirken die Schubstangen nicht mehr mit ihren Stirnseiten auf Umlenkmittel, die aus schrägen Ebenen und Gleitflächen bestehen, sondern mit Verzahnungen auf rotationsgelagerte Umlenkmittel, die eine wesentlich günstigere Krafteinleitung und Verteilung ermöglichen.

In einer Ausgestaltung der Erfindung wird vorgeschlagen, daß als Umlenkmittel ein das Rohrende koaxial umgreifender drehgelagerter Ring vorgesehen ist, der von den Schubstangen verdrehbar ist und der auf seiner dem Rohrende zugewandten Stirnseite Nockenbahnen aufweist, die mit Führungselementen an den Schiebern zusammenwirken und durch die beim Verdrehen des Ringes die Schieber radial bewegbar sind. Die Nockenbahnen, die beispielsweise eine Spiralsteigung aufweisen, bewegen die Werkzeugträger mit den Werkzeugen, je nach Verdrehung des drehgelagerten Ringes über die verzahnten Schubstangen radial zum Rohr, wobei die Schubstangen ihrerseits in die entsprechende Außenverzahnung an dem Ring eingreifen.

Wenn nach einem weiteren Merkmal der Erfindung bei ganzzahlig am Werkzeugkopf angeordneten Schiebern jeweils zwei benachbarte Nockenbahnen unterschiedliche Steigungsrichtungen aufweisen, so kann durch Verdrehen des Ringes in einer Richtung eine Bewegungsumkehr jedes zweiten Schiebers erreicht werden. Es wird also möglich, bei sechs vorgesehenen Schiebern drei Schieber gegen das Rohr radial anzustellen und gleichzeitig drei andere Schieber mit anderen Werkzeugen vom Rohr zurückzufahren.

Die vorgeschlagene Lösung zeichnet sich durch vollständigen Fliehkraftausgleich in Mittelstellung aller Schieber über den Nockenring aus.

Vorzugsweise verlaufen die Nockenbahnen leistenartig an der Stirnseite des Ringes und jede Nockenbahn ist zwischen zwei vorspannbaren, an dem Schieber fliegend gelagerten Rollen eingespannt. Durch die Vorspannung der Rollen ist ein spielfreies Nachfahren der Nockenbahnen möglich, wobei durch den Kraftausgleich und die Lagerung von Rollen und Ring gleichmäßige und genaue Anstellbewegungen erreichbar sind.

Nach einer anderen Variante einer Vorrichtung zur Bearbeitung von Rohrenden ist vorgesehen, daß die Schrägverzahnungen an den Schubstangen an zwei sich gegenüberliegenden Längsseiten angeordnet sind und mit beidseitig der Schubstangen angeordneten Zahnstangen korrespondieren, deren Erstreckungsrichtung quer zur Schubstange und in Richtung der Bewegungsachse der Schieber verläuft, an denen die Zahnstangen befestigt sind. Bei dieser Konstruktion werden die Längsbewegungen der Schubstangen über die Schrägverzahnung an den Schubstangen unmittelbar in quer dazu verlaufende, an den Schiebern befestigte Zahnstangen eingeleitet, so daß beim Längsverschieben der Schubstangen die Schieber in Querrichtung gegen das Rohr oder vom Rohr weg bewegt werden.

Wenn nach einem weiteren Merkmal der Erfindung bei ganzzahlig am Werkzeugkopf angeordneten Schiebern nur die Zahnstangen jedes zweiten Schiebers mit einer Schubstange korrespondieren und die benachbarten Schieber über je ein Zahnrad miteinander verbunden sind, indem die Stirnradverzahnung dieses Zahnrades mit je einer Zahnstange an jedem Schieber gleichzeitig korrespondiert, so ergibt sich auch bei dieser Lösung ein vorteilhafter Fliehkraftausgleich mit den damit einhergehenden Vorteilen.

In einer weiteren Variante der erfindungsgemäßen Vorrichtung ist vorgesehen, daß als Umlenkmittel Nockenspindeln vorgesehen sind, die um in einer gemeinsamen Ebene radial zur Werkzeugkopfachse verlaufende Achsen drehbar im Werkzeugkopf gelagert sind und mindestens über einen Teilbereich ihres Umfanges mit einer in Umfangsrichtung steigenden Nockenbahn versehen sind, durch die die Schieber in Anstellrichtung bewegbar sind. Auch bei dieser Lösung wird die Achsialkraft der Schubstangen in mechanisch günstiger Weise in eine Rotation des Umlenkmittels umgesetzt und in die Linearbewegung des Schiebers weitergeleitet. Die Nockenspindeln selbst werden über die Verzahnung der Schubstangen in Drehung versetzt, wobei die Verzahnung der Schubstangen in entsprechende Verzahnungen am Umfang der Nockenspindel faßt.

Vorzugsweise sind an den Schiebern paarweise gegeneinander anstellbare Rollen fliegend angeordnet, die jeweils eine Nockenbahn zwischen sich einschließen. Die Nockenspindeln benachbarter Schieber sind in entgegengesetzten Drehrichtungen von den Schubstangen beaufschlagbar, so daß auch bei dieser Ausführung der Erfindung der Fliehkraftausgleich zwischen zwei benachbarten gegenläufigen Schiebern über die durch den gemeinsamen Rahmen verbundenen Axial-Schubstangen vorteilhaft möglich ist. Die Anstellbarkeit und Vorspannung der Rollen als Radialübertragungs-element stellt eine spielfreie Kraftübertragung dar, die der Qualität und Leistungsfähigkeit der Vorrichtung unmittelbar zugute kommt. In den Schiebern ist kein Umkehrspiel zu verzeichnen, da Flieh- und Bearbeitungskräfte immer in einer Richtung auf die Übertragungselemente wirken.

Schließlich ist nach einem anderen Merkmal der Erfindung vorgesehen, daß die Werkzeugträger über ein vorspannbares Federsystem von den bei unterschiedlichen radialen Verschiebestellungen der Werkzeugträger aus den Fliehkräften der bewegten Teile entstehenden Differenzkräften entlastbar ist, wobei die Federkräfte und Federkennlinien der Federn auf die sich linear verhaltenden Differenzkräfte und deren Wirkrichtungen abgestimmt sind. Das Federsystem kann dabei unmittelbar an den Werkzeugträgen sowie auch am Rahmen und/oder den Schubstange vorgesehen sein.

Ausführungsbeispiele der Erfindung sind in der Zeichnung dargestellt und werden nachfolgend beschrieben. Es zeigt:
- Fig. 1: eine Rohrendenbearbeitungsvorrichtung mit ringförmigen, mit Nockenbahnen versehenen Umlenkmitteln, im Längsschnitt gemäß Figur 2
- Fig. 2: die Rohrendenbearbeitungsvorrichtung in Vorderansicht,
- Fig. 3: eine Rohrendenbearbeitungsvorrichtung mit Zahnstangen und Fliehkraftausgleich über Stirnzahnräder im Längsschnitt gemäß Figur 4,
- Fig. 4: die Rohrendenbearbeitungsvorrichtung in Vorderansicht,
- Fig. 5: eine Rohrendenbearbeitungsvorrichtung mit Nockenspindeln und Federausgleichssystem im Längsschnitt,
- Fig. 6: den Schnitt gemäß B-B in Figur 7 und
- Fig. 7: die Rohrendenbearbeitungsvorrichtung in Vorderansicht.

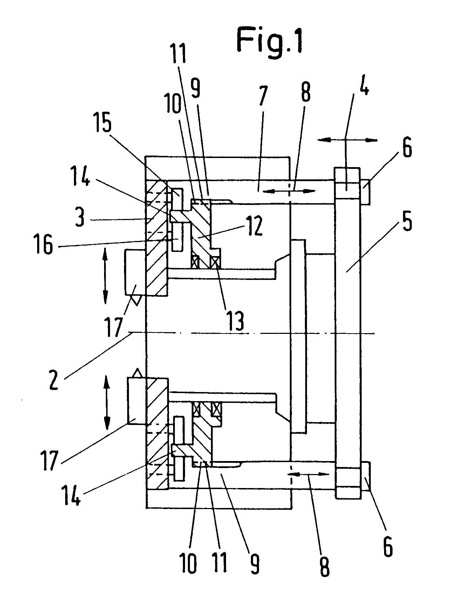

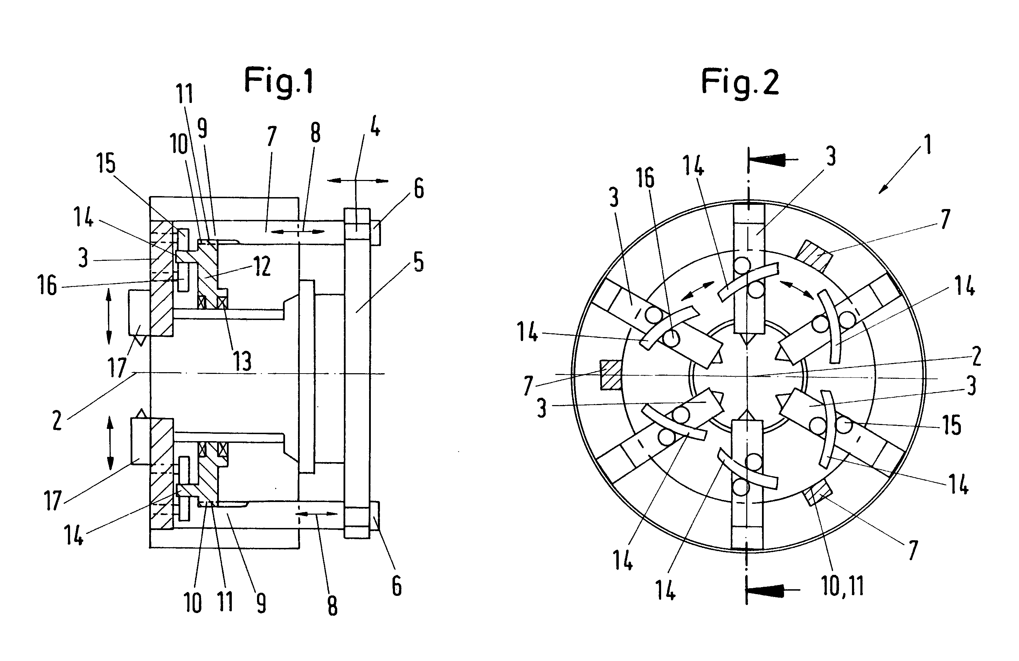

In Figur 1 ist mit 1 der Werkzeugkopf bezeichnet, um dessen Werkzeugkopfachse 2 die Werkzeugträger in Form von Schiebern 3 gleichmäßig verteilt angeordnet sind. Über einen verschiebbaren 4 Rahmen 5 sind mit ihren Enden am Rahmen 5 bei 6 angelenkte Schubstangen 7 gleichzeitig synchron in Längsachsrichtung 8 verschiebbar. Die Schubstangen 7 sind im Bereich ihrer Enden 9 mit Schrägverzahnungen 10 versehen, die in entsprechende Schrägverzahnungen 11 eines Ringes 12 eingreifen, der das (nicht dargestellte) Rohrende und die Werkzeugkopfachse 2 koaxial umgreift und bei 13 wälzgelagert ist.

An der - in der Zeichnung linken - Stirnseite des Ringes 12 sind leistenartig hervorstehende Nockenbahnen 14 ausgebildet, wie besser in der Figur 2 erkennbar. Diese Nockenbahnen korrespondieren mit zwei gegeneinander anstellbaren Rollen 15, 16 , die fliegend am Werkzeugträger 3 gelagert sind. Werden die Schubstangen 7 in ihrer Längsachsrichtung über den Rahmen 5 in Pfeilrichtung 4 bewegt, so bewirken die Schrägverzahnungen 10 und 11 in den Schubstangen 7 und auf dem Außenumfang des Ringes 12 ein Verdrehen des Ringes mit den leistenartigen Nockenbahnen 14, wodurch die Rollen 15, 16, auf den Nockenbahnen 14 spielfrei abrollend, die Werkzeugträger 3 zwingen, sich in Radialrichtung auf die Werkzeugkopfachse 2 hin bzw. von dieser weg zu bewegen.

Da benachbarte Nockenbahnen, wie in der rechten Zeichnungshälfte erkennbar, entgegengesetzte Steigungsrichtungen aufweisen, werden sich beim Verdrehen des Ringes 12 die benachbarten Schieber 3 in entgegengesetzten Richtungen bewegen. An den Schiebern 3 sind bei 17 angedeutet die Werkzeuge befestigt, mit denen das Rohrende bearbeitet wird.

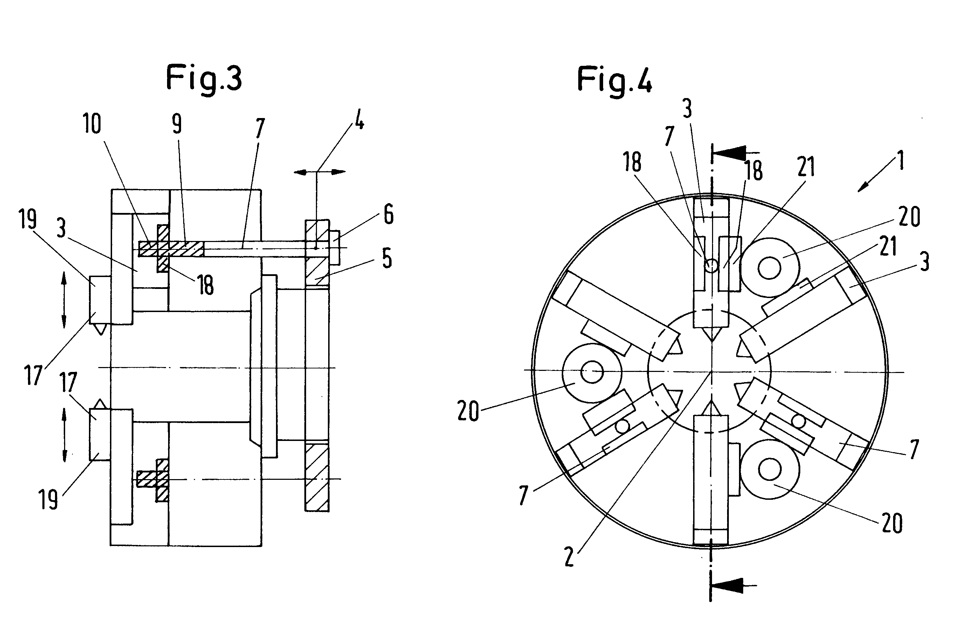

In Figur 3 ist zunächst übereinstimmend mit Figur 1 der Rahmen 5 erkennbar, an den bei 6 die Schubstangen 7 angelenkt sind, von denen drei Stück am Umfang des Werkzeugkopfes 1 verteilt vorgesehen sind. Die Schubstangen 7 sind in ihren Endbereichen 9 wiederum mit Schrägverzahnungen 10 versehen, die jedoch diesmal an den beiden gegenüberliegenden Seiten der Schubstange 7. Die Verzahnungen korrespondieren mit entsprechenden Verzahnungen in beidseitig der Schubstange 7 angeordneten Zahnstangen 18, die ihrerseits am Schieber 3 befestigt sind. Eine Axialbewegung der Schubstangen 7 in Pfeilrichtung 4 bewirkt infolge der Verzahnung eine Bewegung der Schieber 3 mit den Werkzeugen 17 in Pfeilrichtung 19.

Zum Fliehkraftausgleich sind zwischen zwei benachbarten Schiebern 3, von denen nur jeweils jeder Zweite mit den Zahnstangen 18 versehen ist, Stimzahnräder 20 vorgesehen, die mit an jedem Schieber vorgesehenen Zahnstangen 21 gleichzeitig kämmen. Durch das gleichzeitige Kämmen mit beiden Zahnstangen 21 wird eine Richtungsumkehr der benachbarten Schieber bewirkt, so daß der eine Schieber sich auf die Werkzeugkopfachse 2 hin bewegt, während der andere Schieber 3 sich von dieser fort bewegt, wenn die Schubstangen 7 in Pfeilrichtung 4 betätigt werden. Das gesamte System ist spielfrei ausgeführt.

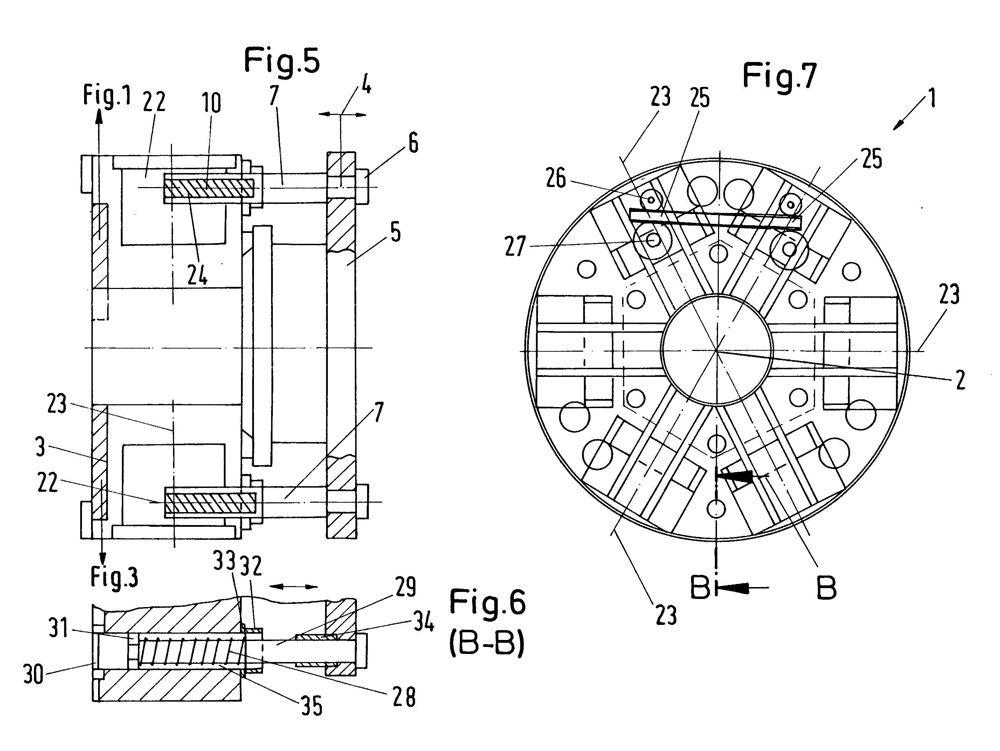

In Figur 5 sind gleiche Teile gleich bezeichnet. Die mit Schrägverzahnungen versehenen Schubstangen 7 sind diesmal mit als Umlenkmittel dienenden Nockenspindeln 22 gepaart, die um radial zur Werkzeugkopfachse 2 verlaufende Drehachsen 23 drehbar im Werkzeugkopf 1 gelagert sind. Die Nockenspindeln weisen an ihrem Umfang eine der Verzahnung 10 der Schubstangen entsprechende Schrägverzahnung 24 auf, so daß beim Bewegen der Schubstangen 7 in Pfeilrichtung 4 die Nockenspindeln 22 in Drehbewegungen versetzt werden. Der Eingriff zwischen Schubstange 7 und Verzahnung 10 ist über Excenter vorspannbar, sodaß bei gegenläufiger Bewegung und Kraftrichtung aus Bearbeitungs- und Fliehkräften bei gleicher Hubrichtrung der Schubstangen 7 Spielfreiheit garantiert ist.

Jede Nockenspindel 22 ist mit einer über einen Teilbereich ihres Umfanges mit einer in Umfangsrichtung steigenden Nockenbahn 25 zu sehen, an der beidseitig und paarweise gegeneinander anstellbare Rollen 26 und 27 spielfrei anliegen. Diese Rollen sind wiederum an den Schiebern 3 fliegend gelagert und bewirken somit ein spielfreies Verschieben dieser Schieber 3 radial zum (nicht dargestellten) Rohrende, wenn die Nockenspindeln in Drehung versetzt werden. Durch Wahl der Steigungsrichtung benachbarter Nockenspindeln 22 bzw. entgegengesetzte Anordnung der Schubstangen zur Mitte Verzahnung ist es möglich, jeweils benachbarte Nockenspindeln in unterschiedlichen Bewegungsrichtungen zu führen, wenn über die Schubstange 7 die Nockenspindeln in Drehung versetzt werden. Durch die spielfrei einstellbaren Rollen und Verzahnungen entsteht im gesamten Werkzeugkopf kein Umkehrspiel.

Die Bearbeitungs- und Fliehkräfte der beweglichen Massen werden reibungsarm mit Untersetzungen ( 1:2 ) in Kräfte an den Schubstangen 7 umgesetzt. Durch die gewählte Anordnung der Schubstangen 7 im Werkzeugkopf 1 haben nebeneinander und gegenüberliegende Schubstangen 7 gegenläufige Kräfte, die sich in Mittelstellung der Schieber 3 infolge ihrer gleichen Massen aufheben. In dieser Stellung wirken somit die geringsten Vorschubkräfte auf alle sechs Schieber 3. Werden bei Verstellung drei Schieber 3 nach außen und gleichzeitig die anderen Schieber 3 nach innen gefahren, so wirken an den Schubstangen 7 und am gemeinsamen Rahmen 5 Differenzkräfte aus den Fliehkräften, die ein linear ansteigendes Verhalten haben. Diese Diffemzkräfte erhöhen die Vorschubkräfte und können dadurch, je nach Steifigkeit der Übertragungselemente, mehr oder weniger große Fertigungsungenauigkeiten begünstigen. Um dies zu verhindern ist ein Gewichtsausgleich dieser Differenzkräfte vorgesehen.

Der Gewichtsausgleich erfolgt über ein vorgespanntes Federsystem mit drei Federn 28, die entsprechend der maximal auftretenden Differenzkräfte in deren Wirkungsrichtungen vorspannbar sind. Die Federn 28 sind so angeordnet, daß sie in der neutralen Stellung der Werkzeuge 17, also wenn sich alle Schieber 3 in der Mittelstellung befinden, entspannt sind. Die Spannung der Federn 28 erfolgt linear bei gleichzeitig linearer Reduzierung der Differenzkräfte.

Wie aus der Zeichnungsfigur 6 (Schnitt B) ersichtlich, sind die Federn 28 auf einer verschiebbar mit dem Rahmen 5 verbundenen Stange 29 angeordnet, von denen drei am Werkzeugkopf 1 verteilt parallel zu der Schubstangen 7 angeordnet sind. Die Stangen 29 erstrecken sich in Bohrungen 35 im Werkzeugkopf 1, die an dem dem Rahmen 5 abgewandten Ende verschlossen sind und einen Anschlag 30 für die Stange 29 bilden. Jede Stange 29 ist an ihren freien Ende mit einem die Feder abstützenden Bund 31 versehen. Am entgegengesetzen Ende ist die Feder von einem frei auf der Stange verschiebbaren Ring 32 abgestützt, der seinerseits von einer am Werkzeugkopf 1 befestigten Hülse 33 gehindert wird, den Werkzeugkopf 1 zu verlassen. Die Hülse 33 ist in ihrem die Stange 29 umgreifenden Innendurchmesser so dimensioniert, daß eine am Rahmen 5 befestigte und über die Stange 29 geschobene Büchse 34 die Hülse 33 durchgdringen kann und den die Feder 28 abstützenden Ring 32 derartig verschieben kann, daß die Feder 28 zusammengedrückt wird, wenn der Bund 31der Stange 29 den Anschlag 30 erreicht hat. Andererseits wird die Feder 28 in entgegengesetzter Richtung vorgespannt, wenn der Rahmen 5 mit den Schubstangen 7 und den Stangen 29 (in der Zeichnung nach rechts) verschoben wird. Dann schiebt der Bund 31 auf der Stange 29 die Feder 28 gegen den verschiebbaren Ring 32, der durch die Hülse 33 in seinem Verschiebeweg begrenzt, die Feder 28 zwischen sich und dem Bund 31 vorspannt. In neutraler Stellung der Schieber 3 liegt die entspannte Feder 28 mit dem Bund 31 am Anschlag 30 sowie am Ring 32 an und ist trotz gewisser Vorspannung kraftneutral bezogen auf den Rahmen 5.

## Patentansprüche

1. Vorrichtung zur Bearbeitung von Rohrenden, insbesondere zum Schneiden von Gewindeanschlüssen, bei der die Schneidwerkzeuge radial zum Rohr anstellbar in einem Werkzeugkopf verschiebbar angeordnet sind, der koaxial um das fest eingespannte Rohrende rotiert, wobei die Anstellbewegung der in als Schieber ausgebildeten Werkzeughaltern eingespannten Werkzeuge gegenüber dem Rohr über achsparallel zum Rohr und über dessen Umfang gleichmäßig verteilt angeordnete Schubstangen erfolgt, deren dem Rohrende ferne Enden an einem gemeinsamen koaxial zur Werkzeugkopfachse verschiebbaren Rahmen angelenkt sind und deren andere Endbereiche mit Schrägverzahnungen (10) versehen sind, die in korrespondierende Verzahnungen (11,18,24) an Umlenkmitteln in Wirkverbindung stehen, über die die achsparallele Vorschubbewegung der Schubstangen in eine synchrone radiale Verschiebebewegung der Schieber zur Anstellung der Schneidwerkzeuge umsetzbar ist,
dadurch gekennzeichnet,
daß die Umlenkmittel rotationsgelagert sind und über die Verzahnungen der auf sie wirkenden Schubstangen verdrehbar sind.

2. Vorrichtung nach Anspruch 1,
dadurch gekennzeichnet,
daß als Umlenkmittel ein das Rohrende koaxial umgreifender drehgelagerter Ring (12) vorgesehen ist, der von den Schubstangen (7) verdrehbar ist und der auf seiner dem Rohrende zugewandten Stirnseite Nockenbahnen (14) aufweist, die mit Führungselementen an den Schiebern (3) zusammenwirken und durch die beim Verdrehen des Ringes (12) die Schieber (3) radial bewegbar sind.

3. Vorrichtung nach Anspruch 2,
dadurch gekennzeichnet,
daß bei ganzzahlig am Werkzeugkopf (1) angeordneten Schiebern (3) jeweils zwei benachbarte Nockenbahnen (14) unterschiedliche Steigungsrichtungen aufweisen.

4. Vorrichtung nach Anspruch 1 bis 3,
dadurch gekennzeichnet,
daß die Nockenbahnen (14) leistenartig an der Stirnseite des Ringes (12) verlaufen und jede Nockenbahn (14) zwischen zwei vorspannbaren, an dem Schieber (3) fliegend gelagerten Rollen (15,16) eingespannt ist.

5. Vorrichtung nach Anspruch 1,
dadurch gekennzeichnet,
daß die Schrägverzahnungen (10,11,18,24) an den Schubstangen (7) an zwei sich gegenüberliegenden Längsseiten angeordnet sind und mit beidseitig der Schubstangen (7) angeordneten Zahnstangen (18) korrespondieren, deren Erstreckungsrichtung quer zur Schubstange (7) und in Richtung der Bewegungsachse der Schieber (3) verläuft, an denen die Zahnstangen (18) befestigt sind.

6. Vorrichtung nach Anspruch 5,
dadurch gekennzeichnet,
daß bei ganzzahlig am Werkzeugkopf (1) angeordneten Schiebern (3) nur die Zahnstangen (18) jedes zweiten Schiebers (3) mit einer Schubstange (7) korrespondieren und daß die benachbarten Schieber (3) über je ein Stirnzahnrad (20) miteinander verbunden sind, indem die Stirnradverzahnung mit je einer Zahnstange (18) an jedem Schieber (3) gleichzeitig korrespondieren.

7. Vorrichtung nach Anspruch 1,
dadurch gekennzeichnet,
daß als Umlenkmittel Nockenspindeln (22) vorgesehen sind, die um in einer gemeinsamen Ebene radial zur Werkzeugkopfachse (2) verlaufende Achsen (23) drehbar im Werkzeugkopf (1) gelagert sind und mindestens über einen Teilbereich ihres Umfanges mit einer in Umfangsrichtung steigenden Nockenbahn (25) versehen sind, durch die die Schieber (3) in Anstellrichtung bewegbar sind.

8. Vorrichtung nach Anspruch 7,
dadurch gekennzeichnet,
daß an den Schiebern (3) paarweise gegeneinander anstellbare Rollen 26,27) fliegend angeordnet sind, die jeweils eine Nockenbahn (25) zwischen sich einschließen.

9. Vorrichtung nach Anspruch 7 und 8,
dadurch gekennzeichnet,
daß die Nockenspindeln (22) benachbarter Schieber (3) in entgegengesetzten Drehrichtungen von den Schubstangen (7) beaufschlagbar sind.

10. Vorrichtung nach einem oder mehreren der Ansprüche 1 bis 9,
dadurch gekennzeichnet,
daß die Verzahnungen der Schubstangen (7) / Zahnräder (20) über Excenter spielfrei einstellbar sind

11. Vorrichtung nach einem oder mehreren der Ansprüche 1 bis 10,
dadurch gekennzeichnet,
daß die Schieber (3) über ein vorspannbares Federsystem von den bei unterschiedlichen radialen Verschiebestellungen der Schieber aus den Fliehkräften der bewegten Teile entstehenden Differenzkräften entlastbar ist, wobei die Federkräfte und Federkennlinien der Federn (28) auf die sich linear verhaltenden Differenzkräfte und deren Wirkrichtungen abgestimmt sind.

## Claims

1. Device for machining tube ends, in particular for cutting thread connections, in which the cutting tools are arranged radially with respect to the tube within a tool head and can be displaced so as to engage with it, the said tool head rotating coaxially around the firmly clamped tube end, such that the engaging movement of the tools held in tool holders formed as sliders towards the tube takes place by virtue of push rods with axes parallel to the tube distributed uniformly around its circumference, whose ends facing away from the tube and are articulated to a common frame which can be moved coaxially to the tool head axis and whose other end areas are provided with helical teeth (10) which are in active engagement with corresponding teeth (11, 18, 24) on deflector elements by virtue of which the axis-parallel thrust movement of the push rods can be converted into a synchronous radial sliding movement of the sliders to engage the cutting tools:
**characterised in that**
the deflector elements are mounted so that they can rotate and can be turned by the teeth of the push rods acting upon them.

2. Device according to Claim 1,
**characterised in that**
as a deflector element a ring (12) surrounding the tube end coaxially and mounted to rotate is provided, which can be turned by the push rods (7) and which, on its side facing towards the tube end, has cams (14) that cooperate with guiding elements on the sliders (3) and by which the sliders (3) can be moved radially when the ring (12) is turned.

3. Device according to Claim 2,
**characterised in that**
with an even number of sliders (3) arranged on the tool head (4) in each case two adjacent cams (14) have different slope directions.

4. Device according to Claims 1 to 3,
**characterised in that**
the cams (14) extend like strips on the face of the ring (12) and each cam (14) is held between two rollers (15, 16) that can be pre-stressed and are mounted with an overhang on the slider (3).

5. Device according to Claim 1,
**characterised in that**
the helical teeth (10, 11, 18, 24) are arranged on the push rods (7) on two opposite long sides and correspond with rack bars (18) arranged on both sides of the push rods (7), the said bars (18) extending transversely to the push rods (7) and in the direction of the movement axis of the sliders (3) to which the bars (18) are attached.

6. Device according to Claim 5,
**characterised in that**
with an even number of sliders (3) arranged on the tool head (1) only the rack bars (18) of every second slider (3) correspond with a push rod (7), and adjacent sliders (3) are connected together by virtue of a spur gear (20) in each case, in that the teeth on the spur gears correspond simultaneously with a respective rack bar (18) on each slider (3).

7. Device according to Claim 1,
**characterised in that**
as deflector elements cam spindles (22) are provided, which are mounted and can rotate in the tool head (1) about an axis (23) in a common plane with and extending radially with respect to the tool head axis )2_ and which, at least over part of their circumference, are provided with a cam (25) sloping in the circumferential direction, by which the sliders (3) can be moved in the engagement direction.

8. Device according to Claim 7,
**characterised in that**
on the sliders (3), rollers (26, 27) which can be moved towards one another in pairs are arranged with an overhang, each of the said pairs enclosing between them a cam (25).

9. Device according to Claims 7 and 8,
**characterised in that**
the cam spindles (22) of adjacent sliders (3) can be acted upon by the push rods (7) in opposite rotation directions.

10. Device according to one or more of Claims 1 to 9,
**characterised in that**
the teeth of the push rods (7)/toothed wheels (20) can be adjusted without play by means of eccentrics.

11. Device according to one or more of Claims 1 to 10,
**characterised in that**
the load on the slider (3) can be relieved via a pre-stressable spring system by virtue of the force differential produced by the centrifugal forces of the moving parts at different radial displacement positions of the slider, such that the spring forces and spring characteristics of the springs (28) are matched to the linear variation of the force differential and its directions of action.

## Revendications

1. Dispositif pour usiner des extrémités de tube, en particulier pour couper des raccords filetés, dans lequel les outils de coupe sont agencés de façon déplaçable dans une tête d'outil, en pouvant être approchés radialement vers le tube, tête qui tourne coaxialement autour de l'extrémité de tube solidement serrée, le mouvement d'approche des outils montés dans des supports d'outil réalisés comme coulisseaux étant effectué par rapport au tube par l'intermédiaire de barres de poussée agencées parallèlement à l'axe par rapport au tube et de façon régulièrement répartie sur sa périphérie, dont les extrémités éloignées de l'extrémité du tube sont articulées sur un bâti commun déplaçable coaxialement par rapport à l'axe de la tête d'outil et dont les autres zones d'extrémité sont munies de dentures hélicoïdales (10), qui sont en liaison active sur des moyens de renvoi dans des dentures correspondantes (11, 18, 24), par l'intermédiaire desquelles le déplacement d'avance, parallèle à l'axe, des barres de poussée peut être transformé en un déplacement radial synchrone des coulisseaux pour l'approche des outils de coupe,
caractérisé en ce que les moyens de renvoi sont montés en rotation et peuvent être tournés par l'intermédiaire des dentures des barres de poussée agissant sur ceux-ci.

2. Dispositif selon la revendication 1,
caractérisé en ce que, comme moyens de renvoi, il est prévu une bague (12) montée rotative, entourant coaxialement l'extrémité du tube, qui peut être tournée par les barres de poussée (7) et qui présente, sur sa face frontale en regard de l'extrémité du tube, des voies à cames (14), qui coopèrent avec des éléments de guidage sur les coulisseaux (3) et grâce auxquelles, par rotation de la bague (12), les coulisseaux (3) peuvent être déplacés radialement.

3. Dispositif selon la revendication 2,
caractérisé en ce que, pour des coulisseaux (3) agencés en nombre entier sur la tête d'outil (1), à chaque fois deux voies à cames voisines (14) présentent différentes directions de pente.

4. Dispositif selon les revendications 1 à 3,
caractérisé en ce que les voies à cames (14) s'étendent sous forme de barrettes sur la face frontale de la bague (12) et chaque voie à cames (14) est serrée entre deux rouleaux (15, 16), pouvant être précontraints, montés de façon mobile sur le coulisseau (3).

5. Dispositif selon la revendication 1,
caractérisé en ce que les dentures hélicoïdales (10, 11, 18, 24) sont agencées sur les barres de poussée (7) sur deux faces longitudinales opposées et correspondent avec des crémaillères (18) agencées des deux côtés des barres de poussée (7), dont la direction d'extension s'étend transversalement à la barre de poussée (7) et en direction de l'axe de déplacement des coulisseaux (3), sur lesquels sont fixées les crémaillères (18).

6. Dispositif selon la revendication 5,
caractérisé en ce que, pour des coulisseaux (3) agencés en nombre entier sur la tête d'outil (1), uniquement les crémaillères (18) de chaque second coulisseau (3) correspondent avec une barre de poussée (7), et en ce que les coulisseaux voisins (3) sont reliés ensemble par l'intermédiaire, à chaque fois, d'une roue à denture frontale (20), en ce que la denture de roue frontale correspond simultanément avec à chaque fois une crémaillère (18) sur chaque coulisseau (3).

7. Dispositif selon la revendication 1,
caractérisé en ce que, comme moyens de renvoi, sont prévus des broches à came (22) qui sont montées de façon rotative dans la tête d'outil (1) autour d'axes (23) s'étendant dans un plan commun radialement par rapport à l'axe (2) de la tête d'outil et sont munies, au moins sur une zone partielle de leur périphérie, d'une voie à cames (25) montant en direction périphérique, grâce à laquelle les coulisseaux (3) peuvent être déplacés dans la direction d'approche.

8. Dispositif selon la revendication 7,
caractérisé en ce que, sur les coulisseaux (3), sont agencés, de façon mobile, des rouleaux (26, 27) pouvant être approchés l'un de l'autre par paire, qui, à chaque fois, englobent entre eux une voie à cames (25).

9. Dispositif selon les revendications 7 et 8,
caractérisé en ce que les broches à came (22) de coulisseaux voisins (3) peuvent être sollicitées par les barres de poussée (7) dans des sens opposés de rotation.

10. Dispositif selon une ou plusieurs des revendications 1 à 9,
caractérisé en ce que les dentures des barres de poussée (7)/roues dentées (20) peuvent être réglées sans jeu par l'intermédiaire d'excentriques.

11. Dispositif selon une ou plusieurs des revendications 1 à 10,
caractérisé en ce que les coulisseaux (3) peuvent être déchargés des forces différentielles créées à partir des forces centrifuges des pièces mobiles pour des positions de déplacement radiales différentes des coulisseaux par l'intermédiaire d'un système élastique pouvant être précontraint, les élasticités et les courbes caractéristiques des ressorts (28) étant accordées aux forces différentielles variant de façon linéaire et à leurs directions d'action.
